# EUROPEAN PATENT SPECIFICATION

(11) **EP 2 917 049 B1**
(45) Date of publication and mention of the grant of the patent: **11.01.2017**
(21) Application number: 13786478.1
(22) Date of filing: 05.11.2013
(51) Int. Cl.: B60C 13/00, B60C 9/02, B60C 15/024

(54) **TIRE HAVING LITTLE AERODYNAMIC DRAG**
REIFEN MIT GERINGEM LUFTWIDERSTAND
PNEUMATIQUE AYANT UNE FAIBLE TRAÎNÉE AÉRODYNAMIQUE

(30) Priority: 09.11.2012 FR 1260664; 25.01.2013 US 201361756632 P
(43) Date of publication of application: 16.09.2015
(73) Proprietor: Compagnie Générale des Etablissements Michelin, 63000 Clermont-Ferrand (FR); MICHELIN Recherche et Technique S.A., 1763 Granges-Paccot (CH)
(72) Inventor: GARDARIN, Benoît, F-63040 Clermont-Ferrand Cedex 9 (FR); BERGER, Eric, F-63040 Clermont-Ferrand Cedex 9 (FR); GUIMARD, Bruno, F-63040 Clermont-Ferrand Cedex 9 (FR); MUHLHOFF, Olivier, F-63040 Clermont-Ferrand Cedex 9 (FR)
(74) Representative: Bauvir, Jacques
(86) International application number: PCT/EP2013/073026
(87) International publication number: WO 2014/072279

(56) References cited:
- WO-A1-2012/147356
- JP-A- H07 276 928

## Description

### FIELD OF THE INVENTION

The present invention relates to tyres for passenger vehicles. It relates more particularly to tyres having a good aerodynamic behaviour.

### BACKGROUND

Nowadays there is a growing need to reduce the energy consumption of passenger vehicles. One possible way involves reducing the aerodynamic drag of these vehicles.

The tyres with which a passenger vehicle is fitted, and more particularly the tyres mounted on the front axle of the vehicle, contribute to the aerodynamic drag of this vehicle. It is estimated that the reduction in aerodynamic drag that can be obtained by optimizing these tyres corresponds to approximately 3% of the total drag of the vehicle. In other words, by astutely designing the tyres, one may hope to reduce fuel consumption.

A tyre having good aerodynamic performance has been proposed, for example, in U.S. Patent No. 4,434,830. It is shown in Figure 3.

Although this conventional tyre, when in use on a vehicle, effectively has a low aerodynamic drag, it is imperative to improve this performance still further, in order to respond to the growing requirements of vehicle manufacturers and of consumers.

### SUMMARY OF THE INVENTION

One of the objectives of the present invention is to provide tyres for passenger vehicles that have excellent aerodynamic performance.

This objective is achieved by a tyre having a particular outer profile that makes it possible to better control a turbulence zone generated by the tyre.

More precisely, the objective is achieved by a tyre comprising:
two beads designed to come into contact with a mounting rim, each bead comprising at least one annular reinforcing structure having a radially innermost point;
two sidewalls extending from the two beads radially outwards, the two sidewalls joining together in a crown; and
a carcass reinforcement extending from one bead to the other, passing through the crown, the carcass reinforcement being anchored in each bead to said at least one annular reinforcing structure;
wherein the tyre has an outer profile such that, for at least one of the two sidewalls, in any radial section, the distance between the carcass reinforcement and the outer profile, measured between a point of the carcass reinforcement and the point of intersection between the outer profile and a direction perpendicular to the carcass reinforcement passing through this point of the carcass reinforcement, achieves a minimum value at a first point of the carcass reinforcement having a radial distance greater than or equal to 0.50·H and less than or equal to 0.75·H of the radially innermost point of the annular reinforcing structure, H being the radial height of the tyre;
wherein the tangent at the carcass reinforcement at the first point is inclined at an angle that is greater than or equal to 5° and less than or equal to 35° (and preferably greater than or equal to 15° and less than or equal to 32°) relative to a radial direction;
wherein there is a first zone of the carcass reinforcement, comprising the first point of the carcass reinforcement, such that, for each first-zone point of the carcass reinforcement, the radius of curvature RCC of the carcass reinforcement is less than the radius of curvature RCO of the outer profile at a point of intersection between the outer profile and a direction perpendicular to the carcass reinforcement passing through this first-zone point of the carcass reinforcement, such that RCO > 1.2·RCC;
wherein there is a second zone of the carcass reinforcement, located radially inside the first zone of the carcass reinforcement, such that, for each second-zone point of the carcass reinforcement, the radius of curvature RCC of the carcass reinforcement is greater than the radius of curvature RCO of the outer profile at the point of intersection between the outer profile and a direction perpendicular to the carcass reinforcement passing through this point of the carcass reinforcement, such that RCO < 0.9·RCC, each second-zone point having a radial distance greater than or equal to 0.40·H of the radially innermost point of the annular reinforcing structure;
it being understood that the angles, distances, thicknesses and radii of curvature are determined when the tyre is fitted to the mounting rim and inflated to its service pressure.

Such a tyre results in aerodynamic drag that is significantly less than the aerodynamic drag obtained with a tyre according to the prior art.

According to a preferred embodiment, there is in this tyre a third zone of the carcass reinforcement, located radially inside the second zone of the carcass reinforcement, such that, for each third-zone point of the carcass reinforcement, the radius of curvature RCC of the carcass reinforcement is less than the radius of curvature RCO of the outer profile of the tyre at a point of intersection between the outer profile and a direction perpendicular to the carcass reinforcement passing through this third-zone point of the carcass reinforcement such that RCO > 1.2·RCC. This embodiment makes it possible to have a curvature of the sidewall that is "slowly variable", which helps to slow down a separation of air flows.

According to yet another embodiment, the crown comprises a tread having an axial edge and, in any radial section, the outer profile of the tyre comprises a zone of concavity situated between the axial edge of the tread and a point of intersection between the outer profile and a direction perpendicular to the carcass reinforcement passing through the first point of the carcass reinforcement. This embodiment proves to be advantageous in tyres having broad crowns.

Preferably, the first zone of the outer profile has no marking, and notably no marking involving a protuberance having a height of more than 0.2 mm relative to a portion of the outer profile that surrounds it, because such marking is likely to disrupt the air flow in the first and second zones and consequently to degrade the aerodynamic performance.

Another aspect of the invention relates to a vehicle comprising at least two axles, fitted with a tyre according to an embodiment of the invention, wherein the tyre is fitted on the front axle, such that a sidewall comprising said first zone and said second zone of the carcass reinforcement is on the side of the tyre that is farthest from the vehicle. It is in this way that the tyre makes a maximum contribution to reducing the aerodynamic drag of the vehicle.

Let us consider the case in which the tyre is a directional tyre, that is to say a tyre having a tread sculpture such that the grip of the tyre, when it is made to turn in one direction, differs from the grip of the tyre when it is made to turn in the other direction. A directional tyre has a preferred direction of rotation, usually indicated by an indicator such as an arrow materialized on a sidewall of the tyre, and is fitted to a vehicle so that the tyre rotates in its preferred direction of rotation when the vehicle moves forward. When it is desired to implement an embodiment of the invention on a directional tyre, it is preferable that both sidewalls (and not just one sidewall) have an outer profile according to the embodiment of the invention, because then it is possible to fit the tyre without distinction on the left and right sides of the vehicle, while obtaining an improvement in the aerodynamic behaviour.

If, on the other hand, the tyre is a tyre that has no preferred rotation direction, it is preferable to ensure that only one of the sidewalls of the tyre has an outer profile according to an embodiment of the invention, because it will always be possible to fit the tyre to the vehicle such that this sidewall is on the side of the tyre that is farthest from the vehicle.

Naturally, it may be advantageous to combine several or even all the embodiments described above.

### BRIEF DESCRIPTION OF THE DRAWINGS

All the figures of this document are schematic.
Figure 1 represents a tyre according to the prior art.
Figure 2 represents a partial view in perspective of a tyre according to the prior art.
Figure 3 represents, in radial section, a reference tyre.
Figure 4 illustrates how the height H of a tyre is determined.
Figures 5 and 6 illustrate how an axial edge of a tread is determined.
Figures 7, 8 and 9 represent, in radial section, a tyre according to embodiments of the invention.

### DETAILED DESCRIPTION OF THE INVENTION

In the use of the term "radial", herein, several different uses of the word by those skilled in the art should be distinguished. First, the expression refers to a radius of the tyre. It is in this sense that it is said of a point P1 that it is "radially inside" a point P2 (or "radially on the inside" of a point P2) if it is closer to the rotation axis of the tyre than the point P2. Conversely, a point P3 is said to be "radially outside" a point P4 (or "radially on the outside" of a point P4) if it is further from the rotation axis of the tyre than the point P4. It will be said that a movement or vector points "radially inwards (or outwards)" when it points in the direction of smaller (or larger) radii. When it is a question of radial distances, this meaning of the term also applies.

On the other hand, a thread or a reinforcement is said to be "radial" when the thread or the reinforcing elements of the reinforcement make with a circumferential direction an angle greater than or equal to 80° and less than or equal to 90°. It should be specified that, as used herein, the term "thread" must be understood in a very general sense and comprises the threads that take the form of monofilaments, multifilaments, a cable, a yarn or an equivalent assembly, irrespective of the material(s) forming the thread or the surface treatment applied in order to enhance its bonding with the rubber material of the tyre.

Finally, the term "radial section" designates a section on a plane that contains the rotation axis of the tyre.

An "axial" direction is a direction parallel to the rotation axis of the tyre. A point P5 is said to be "axially inside" a point P6 (or "axially on the inside" of a point P6) if it is closer to the mid-plane of the tyre than the point P6. Conversely, a point P7 is said to be "axially outside" a point P8 (or "axially on the outside" of a point P8) if it is further from the mid-plane of the tyre than the point P8. The "mid-plane" of the tyre is the plane that is perpendicular to the rotation axis of the tyre and that is situated equidistantly from the annular reinforcing structure(s) of each bead.

A "circumferential" direction is a direction that is perpendicular both to a radius of the tyre and to the axial direction.

The "rolling surface" of a tread, as referred to herein, corresponds to all of the points of the tread that come into contact with the ground or road when the tyre - inflated to its service pressure - rolls on the ground or road.

In the context of this document, the expression "rubber composition" is a rubber composition comprising at least one elastomer and at least one filler.

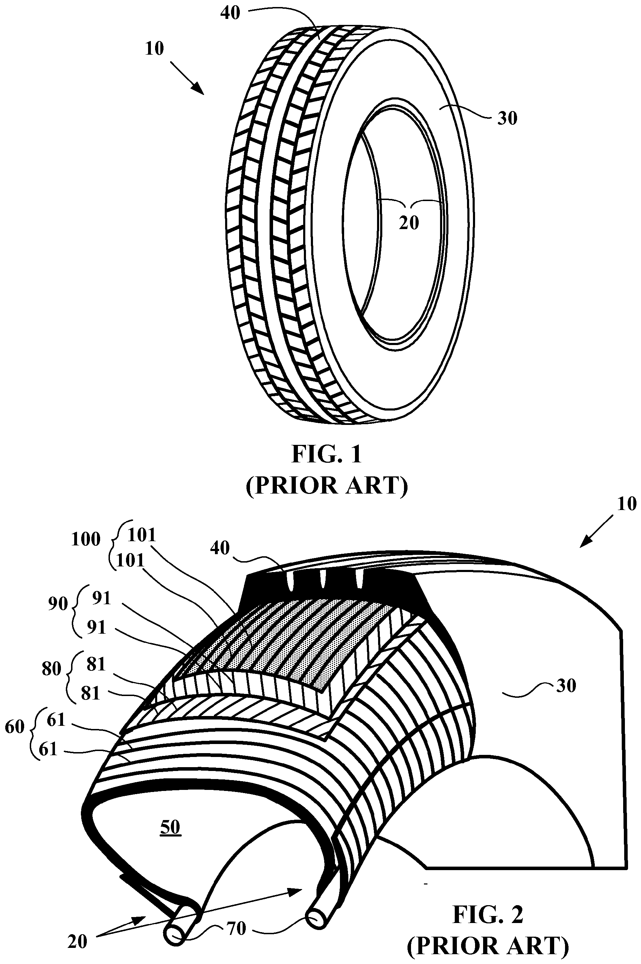

Figure 1 represents schematically a tyre 10 according to the prior art. The tyre 10 comprises a crown comprising a crown reinforcement (invisible in Figure 1) surmounted by a tread 40, two sidewalls 30 extending from the crown radially inwards, and two beads 20 radially inside the sidewalls 30.

Figure 2 represents schematically a partial view in perspective of another tyre 10 according to the prior art and illustrates various components of the tyre. The tyre 10 comprises a carcass reinforcement 60 having threads 61 coated with a rubber composition, and two beads 20 each comprising circumferential reinforcements 70 (in this instance bead wires) which hold the tyre 10 on a rim (not shown). The carcass reinforcement 60 is anchored in each of the beads 20. The tyre 10 also comprises a crown reinforcement comprising two plies 80 and 90. Each of the plies 80 and 90 is reinforced by thread-based reinforcing elements 81 and 91, which are parallel in each layer and crossed from one layer to another, making angles of between 10° and 70° with a circumferential direction. The tyre also comprises a hooping reinforcement 100, positioned radially on the outside of the crown reinforcement. This hooping reinforcement is formed of reinforcing elements 101 oriented circumferentially and wound spirally. A tread 40 is positioned on the hooping reinforcement; it is this tread 40 that makes contact with the road. The tyre 10 that is shown is a tubeless tyre; it comprises an "inner liner" 50 made of a rubber composition that is impermeable to the inflation gas, and covers the inner surface of the tyre.

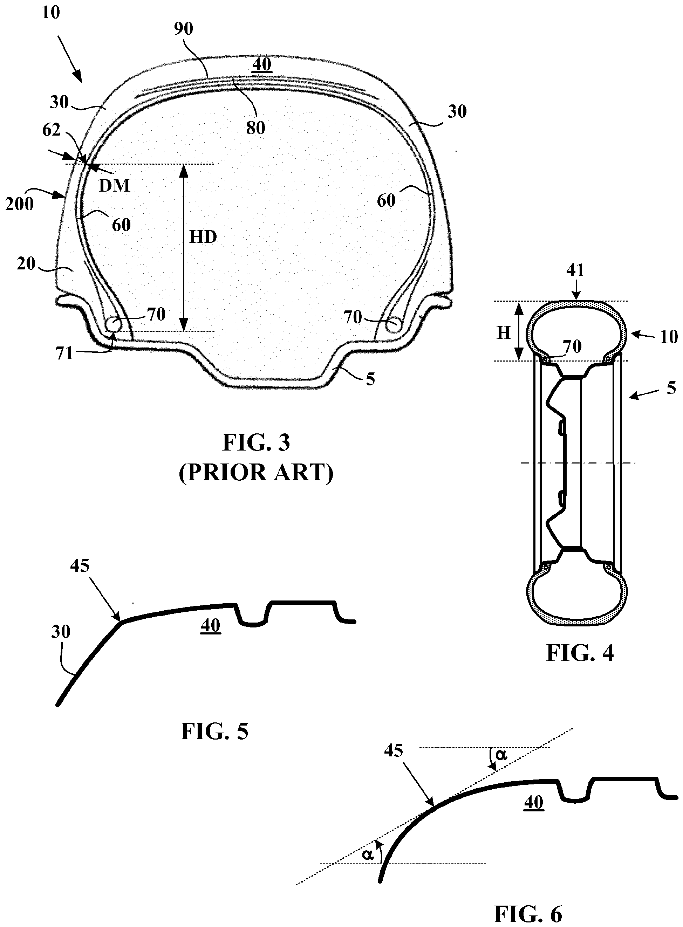

Figure 3 represents, in radial section, a portion of a reference tyre 10. This tyre has been proposed in U.S. Patent No. 4,434,830**.** This tyre comprises two beads 20 designed to come into contact with a mounting rim 5. Each bead comprises an annular reinforcing structure (in this instance, a bead wire 70) having a radially innermost point 71. Two sidewalls 30 extend from the beads 20 radially outwards and come together in a crown comprising two reinforcements 80 and 90 surmounted by a tread 40. A carcass reinforcement 60 extends from one bead 20 to the other, passing through the crown. The carcass reinforcement 60 is anchored in each bead 20 by a turn around the bead wire 70.

The tyre 10 has an outer profile 200 such that, for each of the sidewalls 30, in any radial section, the distance between the carcass reinforcement 60 and the outer profile 200 of the tyre 10, measured between a point of the carcass reinforcement and the point of intersection between the outer profile and a direction perpendicular to the carcass reinforcement passing through this point of the carcass reinforcement, reaches a minimum value DM at a point 62 of the carcass reinforcement 60. This point 62 has a radial distance HD equal to 0.60·H from the radially innermost point 71 of the bead wire 70, H being the radial height of the tyre. The radial height H of the tyre is defined as being the radial distance between the radially innermost point 71 of the annular reinforcing structure 70 of the bead 20 and the radially outermost point 41 (Figure 4) of the tread 40 when the tyre 10 is fitted to the mounting rim 5 and inflated to its service pressure.

The tangent to the carcass reinforcement 60 at this point 62 is inclined at an angle equal to 30° relative to a radial direction R.

Although this tyre 10, when in use on a vehicle, effectively has a low aerodynamic drag, it is imperative to further improve this performance in order to respond to the growing requirements of vehicle manufacturers and consumers.

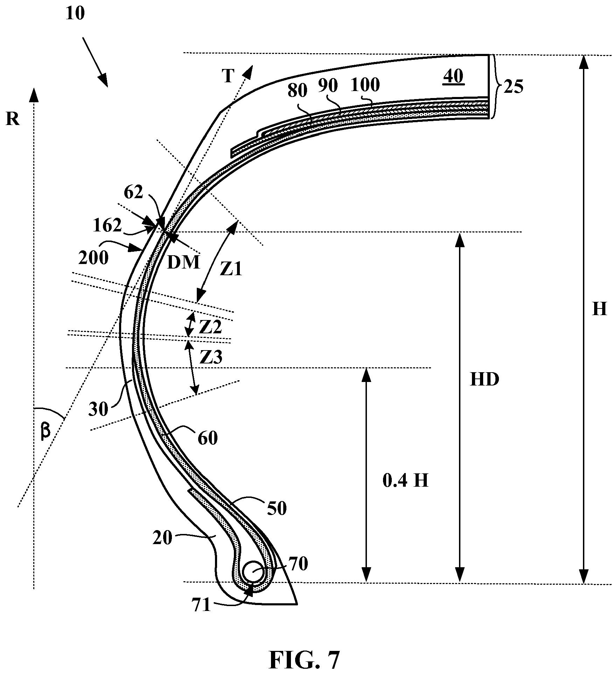

Figure 7 represents, in radial section, a portion of a tyre 10 according to an embodiment of the invention. This tyre comprises two beads 20 designed to come into contact with a mounting rim. Each bead comprises an annular reinforcing structure (in this instance, a bead wire 70) having a radially innermost point 71. Two sidewalls 30 extend from the two beads 20 radially outwards and come together in a crown 25 comprising two reinforcements 80 and 90 surmounted by a hooping reinforcement 100, itself surmounted by a tread 40. A carcass reinforcement 60 extends from one bead 20 to the other, passing through the crown 25. The carcass reinforcement 60 is anchored in each bead 20 by a turn around the bead wire 70.

The tyre 10 has an outer profile 200 such that, for at least one of the sidewalls 30, in any radial section, the distance between the carcass reinforcement 60 and the outer profile 200 of the tyre, measured between a point of the carcass reinforcement and the point of intersection between the outer profile and a direction perpendicular to the carcass reinforcement passing through this point of the carcass reinforcement, reaches its minimum value DM at a first point 62 of the carcass reinforcement 60. This first point 62 has in this instance a radial distance HD equal to 0.65-H from the radially innermost point 71 of the bead wire 70, H being the radial height of the tyre.

As a matter of fact, when a "first point" is referred to, those skilled in the art will understand that it does not necessarily mean a mathematical point but that this first point may cover a small zone inside which the distance between the carcass reinforcement 60 and the outer profile 200 is constant and equal to DM. The conditions specified for the first point are then fulfilled for at least one point of this small zone.

The tangent T to the carcass reinforcement 60 at this point 62 is inclined at an angle β equal to 27° relative to a radial direction R.

There is a first zone Z1 of the carcass reinforcement, comprising the first point 62 of the carcass reinforcement 60, such that, for each first-zone point of the carcass reinforcement, the radius of curvature RCC of the carcass reinforcement is less than the radius of curvature RCO of the outer profile of the tyre at the point of intersection between the outer profile and a direction perpendicular to the carcass reinforcement passing through this first-zone point of the carcass reinforcement, such that RCO > 1.2·RCC. As an example, at the first point 62, the radius of curvature is equal to 45 mm; at the point of intersection 162 between the outer profile 200 of the tyre and a direction perpendicular to the carcass reinforcement passing through this first point 62 of the carcass reinforcement 60, it is equal to 500 mm. The radii of curvature in the rest of the first zone Z1 are close to 45 mm, those in the corresponding portion of the outer profile 200 close to 500 mm.

There is a second zone Z2 of the carcass reinforcement 60, located radially inside the first zone Z1 of the carcass reinforcement 60, such that, for each second-zone point Z2 of the carcass reinforcement 60, the radius of curvature RCC of the carcass reinforcement 60 is greater than the radius of curvature RCO of the outer profile of the tyre at the point of intersection between the outer profile and a direction perpendicular to the carcass reinforcement passing through this second-zone point of the carcass reinforcement, such that RCO < 0.9-RCC. Each second-zone point Z2 has a radial distance greater than or equal to 0.40·H from the radially innermost point of the annular reinforcing structure. The radii of curvature of the carcass reinforcement 60 in the second zone Z2 have an average value of 48 mm, the radii of curvature of the portion of the outer profile 200 corresponding to the second zone have an average value of 28 mm. The tyre of Figure 3 does not have a second zone Z2 satisfying these criteria.

It should be noted that the angles, distances, thicknesses and radii of curvature are determined when the tyre 10 is fitted to the mounting rim and inflated to its service pressure.

Coming back to the tyre shown in Figure 7, there is also a third zone Z3 of the carcass reinforcement 60, located radially inside the second zone Z2 of the carcass reinforcement 60, such that, for each third-zone point Z3 of the carcass reinforcement 60, the radius of curvature RCC of the carcass reinforcement is less than the radius of curvature RCO of the outer profile of the tyre at the point of intersection between the outer profile and a direction perpendicular to the carcass reinforcement passing through this third-zone point of the carcass reinforcement, such that RCO > 1.2·RCC. The radii of curvature of the carcass reinforcement 60 in the third zone Z3 have an average value of 51 mm, the radii of curvature of the portion of the outer profile 200 corresponding to the third zone have an average value of 80 mm.

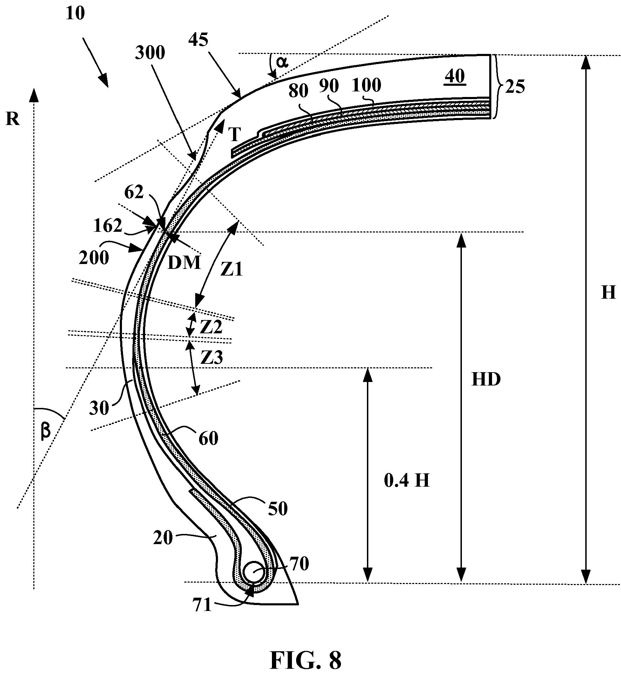

Figure 8 represents, in radial section, a portion of another tyre 10 according to an embodiment of the invention. The crown comprises a tread 40 having an axial edge 45. The way in which the axial edges of a tread are determined is illustrated in Figures 5 and 6 which each show a profile of a tread portion 40 and of the sidewall portion 30 that is adjacent thereto. In certain tyre architectures, the transition from the tread to the sidewall is sharp, as in the case shown in Figure 5 and the determination of the axial edge 45 of the tread 40 is intuitive. There are, however, tyre architectures wherein the transition between the tread and the sidewall is continuous. An example is shown in Figure 6. The edge of the tread is then determined as follows. In a radial section of the tyre, a tangent to the rolling surface of the tyre is drawn at any point of the rolling surface in the zone of transition between the tread and the sidewall. The axial edge is the point at which the angle α (alpha) between the tangent and an axial direction is equal to 30°. When there are several points for which the angle α (alpha) between the tangent and an axial direction is equal to 30°, the radially outermost point is adopted. In the case of the tread 40 shown in Figure 8, the axial edge 45 has been determined in this manner.

The tyre of Figure 8 differs from that of Figure 7 in that, in any radial section, the outer profile of the tyre comprises a zone of concavity 300 situated between the axial edge 45 of the tread 40 and the point of intersection 162.

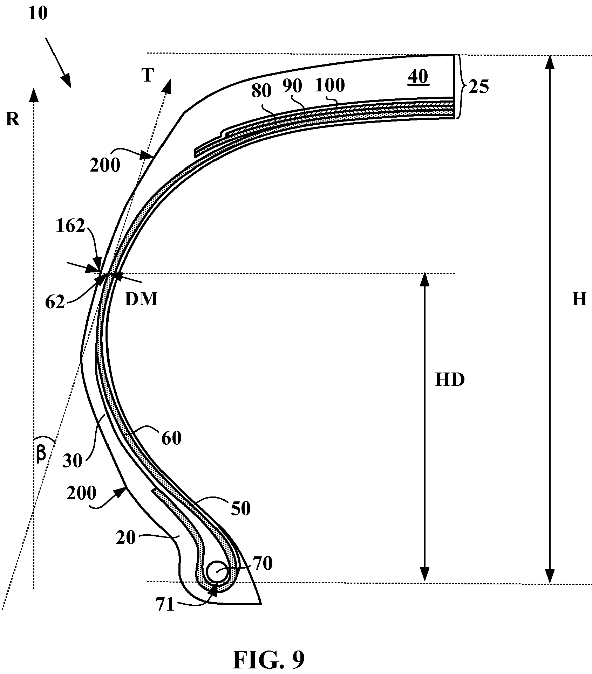

Figure 9 represents, in radial section, a portion of a third tyre 10 according to an embodiment of the invention. It differs from the tyre of Figure 7 in that the tangent T to the carcass reinforcement 60 at the first point 62 is inclined at an angle (β) that is equal to 15° relative to the radial direction R.

Tests have been carried out using CFD (computational fluid dynamics) and in a wind tunnel on a full-scale vehicle. The tests have shown that the appearance of flow separation on sidewalls of a tyre was pushed further downstream for a tyre according to an embodiment of the invention corresponding to the tyre of Figure 7, relative to a tyre according to the prior art (Figure 3). Thus, the wake generated by the tyre is improved and the overall aerodynamic drag coefficient (Cx) of the vehicle is reduced by 0.5 to 2%.

## Claims

1. Tyre comprising:
two beads (20) designed to come into contact with a mounting rim (5), each bead comprising at least one annular reinforcing structure (70) having a radially innermost point (71);
two sidewalls (30) extending from the two beads radially outwards, the two sidewalls joining together in a crown (25);
a carcass reinforcement (60) extending from one bead to the other, passing through the crown, the carcass reinforcement being anchored in each bead to said at least one annular reinforcing structure;
the tyre having an outer profile (200) such that, for at least one of the two sidewalls, in any radial section, the distance between the carcass reinforcement and the outer profile, measured between a point of the carcass reinforcement and the point of intersection (162) between the outer profile and a direction perpendicular to the carcass reinforcement passing through this point of the carcass reinforcement, achieves a minimum value DM at a first point (62) of the carcass reinforcement having a radial distance HD greater than or equal to 0.50·H and less than or equal to 0.75·H from the radially innermost point of the annular reinforcing structure, H being the radial height of the tyre;
wherein the tangent (T) at the carcass reinforcement at the first point is inclined at an angle (β) that is greater than or equal to 5° and less than or equal to 32° relative to a radial direction (R);
wherein there is a first zone (Z1) of the carcass reinforcement comprising the first point (62) of the carcass reinforcement, such that, for each point of the first-zone, the radius of curvature RCC of the carcass reinforcement is less than the radius of curvature RCO of the outer profile at the point of intersection between the outer profile and a direction perpendicular to the carcass reinforcement passing through this point of the first-zone, such that RCO > 1.2·RCC;
**characterized in that** there is a second zone (Z2) of the carcass reinforcement, located radially inside the first zone, such that, for each point of the second-zone of the carcass reinforcement, the radius of curvature RCC of the carcass reinforcement is greater than the radius of curvature RCO of the outer profile at the point of intersection between the outer profile and a direction perpendicular to the carcass reinforcement passing through this point of the second-zone, such that RCO < 0.9·RCC, each point of the second-zone having a radial distance greater than or equal to 0.40·H from the radially innermost point of the annular reinforcing structure; it being understood that the angles, distances, thicknesses and radii of curvature are determined when the tyre is fitted to the mounting rim and inflated to its service pressure.

2. Tyre according to Claim 1, wherein the tangent (T) to the carcass reinforcement (60) at the first point (62) has an inclination relative to a radial direction (R) greater than or equal to 15° and less than or equal to 30°.

3. Tyre according to either one of Claims 1 and 2, wherein there is a third zone (Z3) of the carcass reinforcement (60), located radially inside the second zone (Z2), such that, for each third-zone point, the radius of curvature RCC of the carcass reinforcement is less than the radius of curvature RCO of the outer profile (200) of the tyre at the point of intersection between the outer profile and a direction perpendicular to the carcass reinforcement passing through this third-zone point, such that RCO > 1.2·RCC.

4. Tyre according to any one of Claims 1 to 3, wherein the crown comprises a tread (40) having an axial edge (45) and, in any radial section, the outer profile (200) of the tyre comprises a zone of concavity (300) situated between:
the axial edge of the tread, and
the point of intersection (162) between the outer profile and a direction perpendicular to the carcass reinforcement (60) passing through the first point (62) of the carcass reinforcement.

5. Tyre according to any one of the preceding claims, wherein, in the first zone (Z1), the outer profile (200) has no marking, and notably no marking involving a protuberance having a height of more than 0.2 mm relative to the portion of the outer profile that surrounds the protuberance.

6. Vehicle comprising at least two axles, fitted with a tyre according to any one of Claims 1 to 5, wherein the tyre is fitted on the front axle, such that a sidewall comprising said first zone (Z1) and said second zone (Z2) of the carcass reinforcement is on the side of the tyre that is farthest from the vehicle.

## Patentansprüche

1. Reifen, umfassend:
zwei Reifenwülste (20), die dazu ausgelegt sind, mit einer Montagefelge (5) in Kontakt zu kommen, wobei jede Wulstrand wenigstens eine ringförmige Verstärkungsstruktur (70) umfasst, die einen radial innersten Punkt (71) aufweist;
zwei Seitenwände (30), die sich von den beiden Reifenwülsten radial nach außen erstrecken, wobei sich die beiden Seitenwände in einem Scheitelpunkt (25) aneinanderfügen;
eine Unterbauverstärkung (60), die sich von einer Wulstrand zur anderen erstreckt und dabei durch den Scheitelpunkt führt, wobei die Unterbauverstärkung in jeder Wulstrand mit der wenigstens einen ringförmigen Verstärkungsstruktur verankert ist;
wobei der Reifen ein äußeres Profil (200) derart aufweist, dass für wenigstens eine der beiden Seitenwände in jedem radialen Abschnitt der Abstand zwischen der Unterbauverstärkung und dem äußeren Profil, gemessen zwischen einem Punkt der Unterbauverstärkung und dem Schnittpunkt (162) zwischen dem äußeren Profil und einer senkrecht zu der Unterbauverstärkung und durch diesen Punkt der Unterbauverstärkung verlaufenden Richtung, einen Mindest-DM-Wert an einem ersten Punkt (62) der Unterbauverstärkung erreicht, der einen radialen Abstand HD von dem radial innersten Punkt der ringförmigen Verstärkungsstruktur aufweist, der größer als oder gleich 0,50 H und kleiner als oder gleich 0,75 H ist, wobei H die radiale Höhe des Reifens ist;
wobei die Tangente (T) an der Unterbauverstärkung in dem ersten Punkt in einem Winkel (β) geneigt ist, der größer als oder gleich 5° und kleiner als oder gleich 32° relativ zu einer radialen Richtung (R) ist;
wobei es einen ersten Bereich (Z1) der Unterbauverstärkung gibt, der den ersten Punkt (62) der Unterbauverstärkung derart umfasst, dass für jeden Punkt des ersten Bereichs der Krümmungsradius RCC der Unterbauverstärkung kleiner als der Krümmungsradius RCO des äußeren Profils am Schnittpunkt zwischen dem äußeren Profil und einer senkrecht zu der Unterbauverstärkung und durch diesen Punkt des ersten Bereichs verlaufenden Richtung ist, und zwar derart, dass RCO > 1,2 RCC;
**dadurch gekennzeichnet,**
**dass** es einen zweiten Bereich (Z2) der Unterbauverstärkung gibt, der sich auf eine solche Weise radial innen in dem ersten Bereich befindet, dass für jeden Punkt des zweiten Bereichs der Unterbauverstärkung der Krümmungsradius RCC der Unterbauverstärkung größer als der Krümmungsradius RCO des äußeren Profils am Schnittpunkt zwischen dem äußeren Profil und einer senkrecht zu der Unterbauverstärkung und durch diesen Punkt des zweiten Bereichs verlaufenden Richtung ist, und zwar derart, dass RCO < 0,9 RCC,
wobei jeder Punkt des zweiten Bereichs einen radialen Abstand von dem radial innersten Punkt der ringförmigen Verstärkungsstruktur aufweist, der größer als oder gleich 0,40 H ist;
wobei es sich versteht, dass die Winkel, Abstände, Stärken und Krümmungsradien bestimmt werden, während der Reifen an der Montagefelge angebracht und auf seinen Betriebsdruck aufgepumpt ist.

2. Reifen nach Anspruch 1, wobei die Tangente (T) an der Unterbauverstärkung (60) in dem ersten Punkt (62) eine Neigung relativ zu einer radialen Richtung (R) aufweist, die größer als oder gleich 15° und kleiner als oder gleich 30° ist.

3. Reifen nach einem der Ansprüche 1 und 2, wobei es einen dritten Bereich (Z3) der Unterbauverstärkung (60) gibt, der sich auf eine solche Weise radial innen in dem zweiten Bereich (Z2) befindet, dass für jeden in dem dritten Bereich befindlichen Punkt der Krümmungsradius RCC der Unterbauverstärkung kleiner als der Krümmungsradius RCO des äußeren Profils (200) des Reifens am Schnittpunkt zwischen dem äußeren Profil und einer senkrecht zu der Unterbauverstärkung und durch diesen in dem dritten Bereich befindlichen Punkt verlaufenden Richtung ist, und zwar derart, dass RCO > 1,2 RCC.

4. Reifen nach einem der Ansprüche 1 bis 3, wobei der Scheitelpunkt eine Lauffläche (40) umfasst, die einen radialen Rand aufweist (45), und in jeglichem radialen Abschnitt das äußere Profil (200) des Reifens einen konkaven Bereich (300) umfasst, der sich zwischen
dem axialen Rand der Lauffläche und
dem Schnittpunkt (162) zwischen dem äußeren Profil und einer senkrecht zu der Unterbauverstärkung (60) und durch den ersten Punkt (62) der Unterbauverstärkung verlaufenden Richtung befindet.

5. Reifen nach einem der vorhergehenden Ansprüche, wobei in dem ersten Bereich (Z1) das äußere Profil (200) keine Markierung aufweist, und insbesondere keine Markierung, die einen Vorsprung mit sich bringt, der eine Höhe von mehr als 0,2 mm relativ zu dem Teil des äußeren Profils, der den Vorsprung umgibt, aufweist.

6. Fahrzeug, das wenigstens zwei Achsen umfasst und mit einem Reifen nach einem der Ansprüche 1 bis 5 ausgerüstet ist, wobei der Reifen auf eine solche Weise an der Vorderachse angebracht ist, dass sich eine Seitenwand, die den ersten Bereich (Z1) und den zweiten Bereich (Z2) der Unterbauverstärkung umfasst, auf der Seite des Reifens befindet, die am weitesten von dem Fahrzeug entfernt ist.

## Revendications

1. Pneumatique comportant :
deux bourrelets (20) destinés à entrer en contact avec une jante de montage (5), chaque bourrelet comportant au moins une structure annulaire de renforcement (70) ayant un point (71) radialement le plus à l'intérieur ;
deux flancs (30) prolongeant les bourrelets radialement vers l'extérieur, les deux flancs s'unissant dans un sommet (25) ;
une armature de carcasse (60) s'étendant d'un bourrelet à l'autre, en passant par le sommet, l'armature de carcasse étant ancrée dans chaque bourrelet à ladite au moins une structure annulaire de renforcement ;
le pneumatique ayant un profil extérieur (200) tel que, dans toute section radiale, la distance entre l'armature de carcasse et le profil extérieur du pneumatique, mesurée entre un point de l'armature de carcasse et le point d'intersection (162) entre le profil extérieur du pneumatique et la direction perpendiculaire à l'armature de carcasse passant par ce point de l'armature de carcasse, atteint sa valeur minimale (DM) en un premier point (62) de l'armature de carcasse ayant une distance radiale (HD) supérieure ou égale à 0.50-H et inférieure ou égale à 0.75·H dudit point radialement le plus à l'intérieur de la structure annulaire de renforcement, H étant la hauteur radiale du pneumatique ;
dans lequel la tangente (T) à l'armature de carcasse en ledit premier point est inclinée d'un angle (β) qui est supérieur ou égal à 5° et inférieur ou égal à 32° par rapport à une direction radiale (R) ;
dans lequel il existe une première zone (Z1) de l'armature de carcasse, comprenant ledit premier point (62) de l'armature de carcasse, telle que, pour chaque point de la première zone de l'armature de carcasse, le rayon de courbure RCC de l'armature de carcasse est inférieur au rayon de courbure RCE du profil extérieur du pneumatique dans le point d'intersection entre le profil extérieur du pneumatique et la direction perpendiculaire à l'armature de carcasse passant par ce point de l'armature de carcasse, de manière à ce que RCE > 1.2·RCC;
**caractérisé en ce qu'** il existe une deuxième zone (Z2) de l'armature de carcasse, radialement à l'intérieur de ladite première zone de l'armature de carcasse, telle que, pour chaque point de la deuxième zone de l'armature de carcasse, le rayon de courbure RCC de l'armature de carcasse est supérieur au rayon de courbure RCE du profil extérieur du pneumatique dans le point d'intersection entre le profil extérieur du pneumatique et la direction perpendiculaire à l'armature de carcasse passant par ce point de l'armature de carcasse, de manière à ce que RCE < 0.9·RCC, chaque point de la deuxième zone ayant une distance radiale supérieure ou égale à 0.40·H dudit point radialement le plus à l'intérieur de la structure annulaire de renforcement ;
étant entendu que les angles, distances, épaisseurs et rayons de courbure sont déterminés lorsque le pneumatique est monté sur la jante de montage et gonflé à sa pression de service.

2. Pneumatique selon la revendication 1, dans lequel la tangente (T) à l'armature de carcasse (60) en ledit premier point (62) a une inclinaison par rapport à une direction radiale (R) supérieure ou égale à 15° et inférieure ou égale à 30°.

3. Pneumatique selon l'une quelconque des revendications 1 ou 2, dans lequel il existe une troisième zone (Z3) de l'armature de carcasse (60), radialement à l'intérieur de ladite deuxième zone (Z2) de l'armature de carcasse, telle que, pour chaque point de la troisième zone de l'armature de carcasse, le rayon de courbure RCC de l'armature de carcasse est inférieur au rayon de courbure RCE du profil extérieur (200) du pneumatique dans le point d'intersection entre le profil extérieur du pneumatique et la direction perpendiculaire à l'armature de carcasse passant par ce point de l'armature de carcasse, de manière à ce que RCE > 1.2·RCC.

4. Pneumatique selon l'une quelconque des revendications 1 à 3, dans lequel le sommet comporte une bande de roulement (40) ayant un bord axial (45) et, dans toute section radiale, le profil extérieur (200) du pneumatique comporte une zone de concavité (300) située entre :
le bord axial de la bande de roulement, et
le point d'intersection (162) entre le profil extérieur du pneumatique et la direction perpendiculaire à l'armature de carcasse (60) passant par ledit premier point (62) de l'armature de carcasse.

5. Pneumatique selon l'une quelconque des revendications précédentes, dans lequel la première zone (Z1) du profil extérieur (200) est dépourvue de tout marquage, et notamment de tout marquage impliquant des protubérances ayant une hauteur de plus de 0,2 mm par rapport à la partie du profil extérieur qui les entoure.

6. Véhicule comportant au moins deux essieux, équipé d'un pneumatique selon l'une quelconque des revendications 1 à 5, dans lequel le pneumatique est monté sur l'essieu avant, de manière à ce que le flanc comprenant ladite première zone (Z1) et ladite seconde zone (Z2) de l'armature de carcasse est sur le côté du pneumatique qui est le plus éloigné du véhicule.
